# FASCICULE DE BREVET EUROPEEN

(11) **EP 1 209 395 B1**
(45) Date de publication et mention de la délivrance du brevet: **18.01.2006**
(21) Numéro de dépôt: 01402804.7
(22) Date de dépôt: 29.10.2001
(51) Int. Cl.: F16K 35/10

(54) **Dispositif de sécurité pour raccord de tuyauterie**
Sicherheitsvorrichtung für eine Rohrleitungsarmatur
Safety arrangement for a pipeline coupling

(30) Priorité: 15.11.2000 FR 0014721
(43) Date de publication de la demande: 29.05.2002
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Klok, Cornélis, 94370 Noiseau (FR)
(74) Mandataire: Le Moenner, Gabriel

(56) Documents cités:
- US-A- 3 006 181
- US-A- 4 397 332
- US-A- 4 736 765

## Description

La présente invention conceme les dispositifs de sécurité pour raccords de tuyauterie de fluide cryogénique comprenant deux extrémités filetées prolongeant une partie de corps centrale et destinées à être raccordées à des éléments de tuyauterie à raccorder, et plus particulièrement les dispositifs de sécurité pour raccords de tuyauterie de remplissage et/ou de soutirage de réservoirs de fluides cryogéniques.

Les raccords de tuyauteries de fluides cryogéniques sont dimensionnés différemment selon les fluides concemés, classés par genre selon leur degré de dangerosité, typiquement soit un gaz inerte tel que l'azote ou l'argon, soit de l'oxygène. Les raccords doivent pouvoir être changés en cas d'avarie ou de changement du fluide à stocker dans le réservoir, ce qui peut entraîner des interversions non contrôlées.

La présente invention a pour objet de proposer un dispositif de sécurité empêchant de telles interversions non contrôlées et permettant d'identifier de façon fiable et rapide les différents raccords en limitant ainsi les risques de branchement inappropriés.

Pour ce faire, selon une caractéristique de l'invention, la partie de corps du raccord comporte une bride s'étendant radialement vers l'extérieur et comportant au moins une paire d'orfices espacés d'une distance prédéterminée, le dispositif de sécurité comportant en outre une pièce de retenue comprenant une partie avant formée avec une paire d'orifices espacés de ladite distance prédéterminée et servant à sa solidarisation de la pièce de retenue avec la bride, et une partie arrière susceptible de coopérer en butée avec un desdits éléments de tuyauterie sur lequel le raccord est monté.

De façon plus particulière:
- la pièce de retenue porte un marquage
- la distance prédéterminée est sélectionnée dans un groupe d'au moins deux distances différentes, correspondant typiquement à des genres de gaz différents
- le marquage de la pièce de retenue est associée à une desdites distances prédéterminées.

Le document US-A-3,006,181 décrit une équerre d'accrochage d'un cadenas de verrouillage de volant de vanne montée prisonnière sur un élément de tuyauterie relié à la vanne.

La présente invention a également pour objet un réservoir de fluide cryogénique, typiquement de gaz de l'air liquéfié, comprenant au moins une tuyauterie équipée d'un dispositif de sécurité tel que défini ci-dessus.

D'autres caractéristiques et avantages de la présente invention ressortiront de la description suivante de modes de réalisation, donnés à titre illustratif mais nullement limitatif, faites en relation avec les dessins annexés, sur lesquels :
- la figure 1 est une vue de côté d'un mode de réalisation d'un dispositif de sécurité selon l'invention ;
- les figures 2 et 3 sont des vues respectivement de côté et de dessus d'un réservoir cryogénique multi-sorties équipé de dispositifs de sécurité selon la figure 1 ;
- la figure 4 est une vue en coupe longitudinale d'un raccord selon l'invention ;
- les figures 5 et 6 sont des vues de face de deux pièces de retenue différenciées selon l'invention.

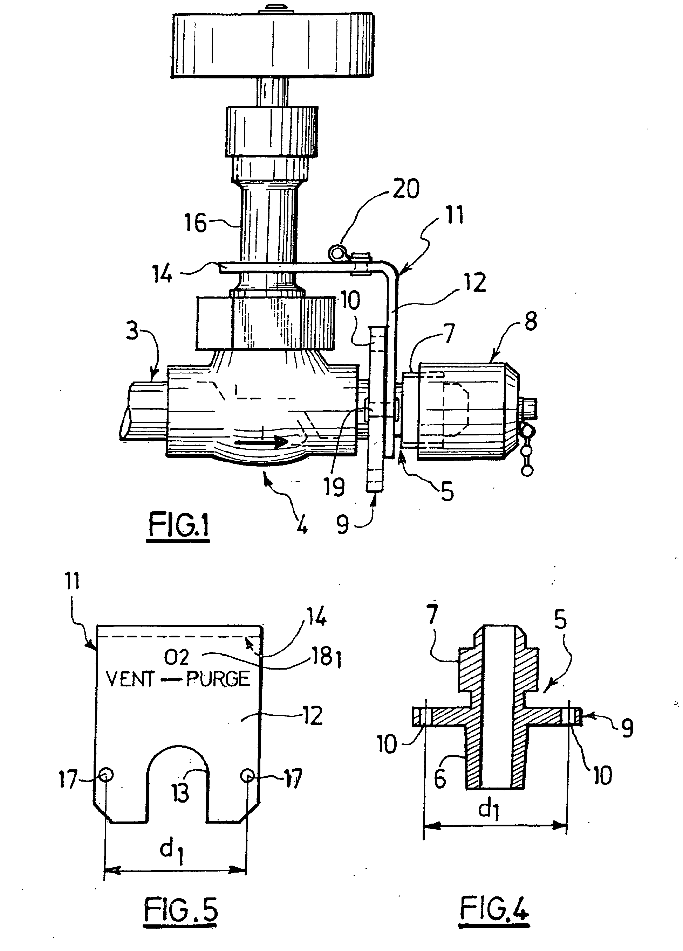

Sur les figures 2 et 3 on a représenté un réservoir de fluide cryogénique, généralement désigné par la référence 1, comportant à sa partie supérieure, protégés par une rampe de manutention 2, plusieurs tuyaux de remplissage ou de soutirage 3₁, 3₂, 3₃ pourvus chacun d'une vanne de contrôle de passage de fluide 4.

Comme on le voit mieux sur la figure 1, dans l'extrémité de la vanne 4 opposée au tuyau 3 est monté un raccord 5 servant au raccordement du tuyau 3 avec une tuyauterie extérieure (non représentée). Comme on le voit sur la figure 4, le raccord 5, réalisé typiquement en laiton, comporte une partie filetée arrière 6 destinée à être vissée dans la vanne 4 et une partie filetée avant 7 destinée au raccordement avec ladite tuyauterie extérieure et normalement protégé, avant ledit raccordement, par un capuchon amovible 8.

Selon un aspect de l'invention, le raccord 5 comporte, entre les parties filetées 6 et 7, au moins une bride 9 s'étendant radialement vers l'extérieur et pourvue d'au moins une paire (typiquement deux paires) d'orifices traversant 10 écartés d'une distance prédéterminée d₁.

Le dispositif de sécurité selon l'invention comporte d'autre part une pièce de retenue ou étrier 11, réalisée avantageusement en acier inoxydable, présentant, dans le mode de réalisation représenté, une forme généralement en L avec une aile avant 12 pourvue d'une découpe en U 13 destinée à venir s'engager dans la dépouille du filetage 7 du raccord 5, en avant de la bride 9, et une aile arrière 14, également pourvue d'une découpe en U, plus large, 15 pour venir entourer, en configuration de montage, le fût de guidage de volant 16 de la vanne 4.

Selon un aspect de l'invention, l'aile avant 12 de l'étrier 11, comporte de part et d'autre de la découpe en U 13, une paire d'orifices 17 espacés de la même distance d₁ que la paire d'orifices 10 de la bride 9 du raccord 5.

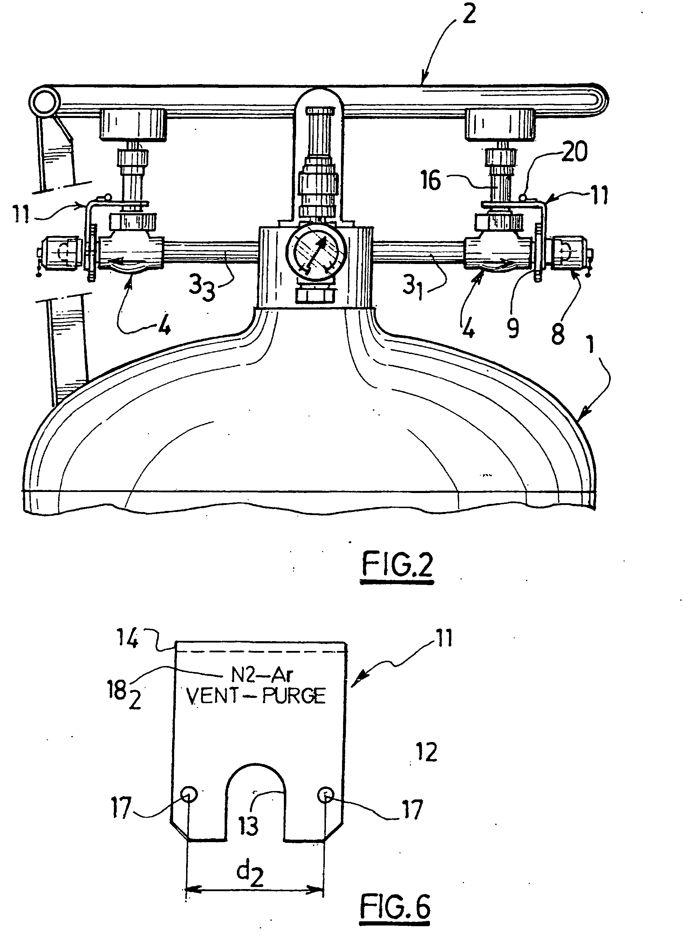

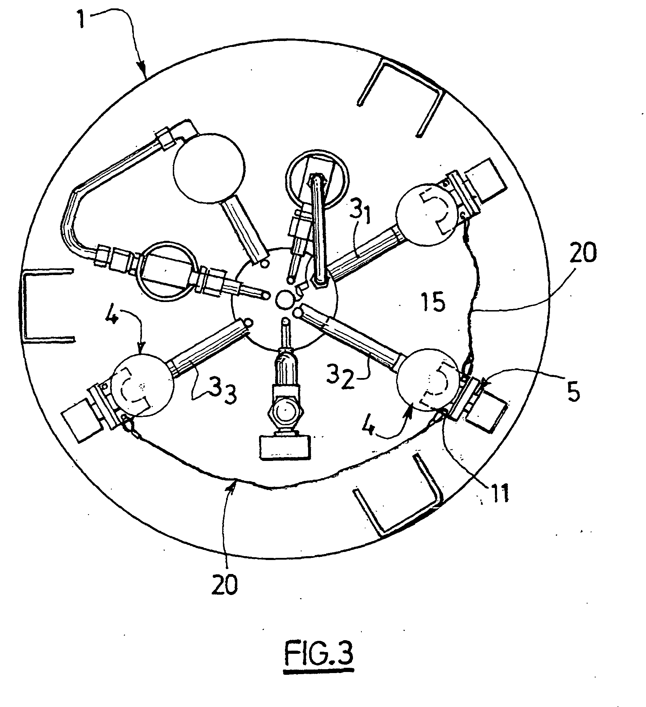

Selon un autre aspect de l'invention, l'écartement dᵢ est choisi dans un groupe d'au moins deux écartements différents, à savoir typiquement un écartement d₁ pour un raccord d'oxygène (figures 4 et 5) et un écartement différent d₂ pour un gaz inerte tel qu'azote ou argon (figure 6). Pour éviter tout questionnement et d'éventuelles mesures erronées des écartements dᵢ, chaque étrier 11 comporte un marquage en clair 18ᵢ correspondant à l'écartement dᵢ, permettant ainsi d'apparier immédiatement l'étrier 11 et le raccord 5 correspondant au type de gaz concerné.

On comprendra dès lors que, une fois cet appariement fait, on met en place le raccord 5 en le vissant dans la vanne 4, on insère l'étrier 11 avec ses parties en U entourant le raccord 5 et le fût de vanne 16 et l'on solidarise de façon indémontable le raccord 5 et l'étrier 11 par des rivets 19 glissés dans les orifices 10 et 17 puis comprimés, rendant ainsi le raccord indémontable sans destruction des rivets.

Dans le cas de réservoirs 1 munis d'une pluralité de tuyauteries de remplissage/soutirage tels que celui représenté sur les figures 2 et 3, on prévoira avantageusement de réaliser à l'avance des jeux de 2 ou 3 étriers 11 pour un même type de gaz reliés les uns aux autres par un lien souple à forte résistance à la traction 20, par exemple un câble métallique ou une tresse de fibres polyamides, en limitant ainsi les risques de mélange, dans les paniers de logement, d'étriers de familles différentes et en évitant des risques de monte d'étriers de familles différentes sur un même récipient.

Comme susmentionné, la présente invention trouve une application particulière dans les réservoirs de gaz de l'air liquéfié, typiquement de l'oxygène d'une part, de l'argon et de l'azote d'autre part.

La présente invention ne se trouve pas cependant limitée à ces modes de réalisation et est susceptible de modifications et de variantes qui apparaîtront à l'homme de l'art dans le cadre des revendications ci-après.

## Revendications

1. Dispositif de sécurité pour raccord de tuyauterie de fluide cryogénique comprenant deux extrémités filetées prolongeant une partie de corps centrale et destinées à être raccordées à des éléments de tuyauterie à raccorder, **caractérisé en ce que** la partie de corps centrale comporte une bride (9) s'étendant radialement vers l'extérieur et comportant au moins une paire d'orifices (10) espacés d'une distance prédéterminée (dᵢ) et **en ce qu'**il comporte une pièce de retenue (11) comportant une partie avant (12) formée avec une paire d'orifices (17) espacés de ladite distance prédéterminée (dᵢ) et servant à sa solidarisation avec la bride (9), et une partie arrière (14) susceptible de coopérer en butée avec un desdits élément (7) de tuyauterie.

2. Dispositif selon la revendication 1, **caractérisé en ce que** la pièce de retenue (11) a une forme générale en L.

3. Dispositif selon la revendication 1 ou la revendication 2, **caractérisé en ce que** l'élément de tuyauterie est une vanne (4,16).

4. Dispositif selon l'une des revendications précédentes, **caractérisé en ce que** la partie arrière (14) de la pièce de retenue a une forme en U (15) pour recevoir une partie (16) de la vanne (4).

5. Dispositif selon l'une des revendications précédentes, **caractérisé en ce que** la pièce de retenue (11) porte un marquage (18ᵢ).

6. Dispositif selon l'une des revendications précédentes, **caractérisé en ce que** la distance prédéterminée (dᵢ) est sélectionnée dans un groupe d'au moins deux distances différentes (d₁, d₂).

7. Dispositif selon la revendication 5 et la revendication 6, **caractérisé en ce que** le marquage (18ᵢ) est associé à une desdites distances prédéterminées (dᵢ).

8. Réservoir de fluide cryogénique comprenant au moins une tuyauterie (3) équipé d'un dispositif de sécurité selon l'une des revendications précédentes.

9. Réservoir selon la revendication 8 comprenant au moins deux tuyaux (3₁, 3₃) pourvus chacun d'un dispositif selon une des revendications 1 à 7 dont les pièces de retenue (11) sont reliées les unes aux autres par un lien souple (20).

10. Réservoir selon l'une des revendications 8 et 9, **caractérisé en ce qu'**il contient un gaz de l'air.

## Patentansprüche

1. Sicherheitsvorrichtung für Kältemittel-Rohrleitungsverbindung mit zwei, einen zentralen Körperteil verlängernden Gewindeenden, die dazu bestimmt sind, mit zu verbindenden Rohrleitungselementen verbunden zu werden, **dadurch gekennzeichnet, dass** der zentrale Körperteil einen sich radial nach außen erstreckenden und mindestens ein Paar von in einem vorbestimmten Abstand (dᵢ) voneinander angeordneten Öffnungen (10) aufweisenden Flansch (9) aufweist, und dass sie ein Haltestück (11) mit einem aus einem Paar von in dem besagten Abstand (dᵢ) voneinander angeordneten Öffnungen (17) gebildeten und der festen Verbindung mit dem Flansch (9) dienenden vorderen Teil und einem mit einem der Rohrleitungselemente (7) im Anschlag zusammenwirkenden hinteren Teil (14) aufweist.

2. Vorrichtung nach Anspruch 1, **dadurch gekennzeichnet, dass** das Haltestück (11) allgemein L-förmig ist.

3. Vorrichtung nach Anspruch 1 oder 2, **dadurch gekennzeichnet, dass** das Rohrleitungselement ein Ventil (4, 16) ist.

4. Vorrichtung nach einem der vorhergehenden Ansprüche, **dadurch gekennzeichnet, dass** der hintere Teil (14) des Haltestücks zur Aufnahme eines Teils (16) des Ventils (4) U-förmig (15) ist.

5. Vorrichtung nach einem der vorhergehenden Ansprüche, **dadurch gekennzeichnet, dass** das Haltestück (11) eine Kennzeichnung (18ᵢ) trägt.

6. Vorrichtung nach einem der vorhergehenden Ansprüche, **dadurch gekennzeichnet, dass** der vorbestimmte Abstand (dᵢ) aus einer Gruppe von mindestens zwei unterschiedlichen Abständen (d₁, d₂) ausgewählt wird.

7. Vorrichtung nach Anspruch 5 und 6, **dadurch gekennzeichnet, dass** die Kennzeichnung (18ᵢ) einem der vorbestimmten Abstände (dᵢ) zugeordnet ist.

8. Kältemittelbehälter mit mindestens einer Rohrleitung (3), der mit einer Sicherheitsvorrichtung gemäß einem der vorhergehenden Ansprüche ausgerüstet ist.

9. Behälter nach Anspruch 8 mit mindestens zwei, jeweils mit einer Vorrichtung gemäß Anspruch 1 bis 7 versehenen Rohrleitungen (3₁, 3₃), deren Haltestücke (11) über eine elastische Verbindung (20) miteinander verbunden sind.

10. Behälter nach einem der Ansprüche 8 und 9, **dadurch gekennzeichnet, dass** er ein Luftgas enthält.

## Claims

1. Safety device for a cryogenic fluid pipe coupling comprising two threaded ends extending a central body part and intended to be coupled to pipework elements that are to be connected, **characterized in that** the central body part comprises a flange (9) extending radially outwards and comprising at least one pair of orifices (10) spaced a predetermined distance (dᵢ) apart and **in that** it comprises a retaining piece (11) comprising a front part (12) formed with a pair of orifices (17) spaced the said predetermined distance (dᵢ) apart and used to secure it to the flange (9), and a rear part (14) able to collaborate by abutment with one of the said pipework elements (7).

2. Device according to Claim 1, **characterized in that** the retaining piece (11) is in the overall shape of an L.

3. Device according to Claim 1 or Claim 2, **characterized in that** the pipework element is a valve (4, 16).

4. Device according to one of the preceding claims, **characterized in that** the rear part (14) of the retaining piece has a U-shape (15) so as to accept part (16) of the valve (4).

5. Device according to one of the preceding claims, **characterized in that** the retaining piece (11) bears markings (18ᵢ).

6. Device according to one of the preceding claims, **characterized in that** the predetermined distance (dᵢ) is selected from a group of at least two different distances (d₁, d₂).

7. Device according to Claim 5 and Claim 6, **characterized in that** the markings (18ᵢ) are associated with one of the said predetermined distances (dᵢ).

8. Reservoir of cryogenic fluid comprising at least one set of pipework (3) equipped with a safety device according to one of the preceding claims.

9. Reservoir according to Claim 8 comprising at least two pipes (3₁, 3₃) each provided with a device according to one of Claims 1 to 7 in which the retaining pieces (11) are connected to one another by a flexible tie (20).

10. Reservoir according to one of Claims 8 and 9, **characterized in that** it contains one of the gases of the air.
